(19) Europäisches Patentamt

European Patent Office

Office européen des brevets

(11) Veröffentlichungsnummer: **0 108 948**

**B1**

(12) **EUROPÄISCHE PATENTSCHRIFT**

(45) Veröffentlichungstag der Patentschrift:
08.06.88

(21) Anmeldenummer: **83110369.2**

(22) Anmeldetag: **18.10.83**

(51) Int. Cl.⁴: **B 60 N 1/08**

┄┄┄┄┄┄┄┄┄┄┄┄┄┄┄┄┄┄┄┄┄┄┄┄┄┄┄┄┄┄┄┄

(54) **Gleitschiene für den Sitz eines Kraftfahrzeuges.**

(30) Priorität: **10.11.82 DE 8231483 U**

(43) Veröffentlichungstag der Anmeldung:
**23.05.84 Patentblatt 84/21**

(45) Bekanntmachung des Hinweises auf die Patenterteilung:
**08.06.88 Patentblatt 88/23**

(84) Benannte Vertragsstaaten:
**DE FR GB IT**

(56) Entgegenhaltungen:
**WO-A-83/03061**
**DE-A-2 624 903**
**DE-A-2 832 519**
**FR-A-1 523 004**
**GB-A-637 219**

(73) Patentinhaber: **AUDI AG, Postfach 220, D-8070 Ingolstadt (DE)**

(72) Erfinder: **Lechler, Rolf, Stuttgarter Strasse 84/u, D-7107 Neckarsulm (DE)**

(74) Vertreter: **Speidel, Eberhardt, Postfach 1320 Waldpromenade 26, D-8035 Gauting (DE)**

**Beschreibung**

Die Erfindung bezieht sich auf eine Gleitschiene für den Sitz eines Kraftfahrzeuges nach dem Oberbegriff des Patentanspruches.

Mit den üblichen Gleitschienen muß der Sitz zum Herausnehmen so weit nach vorn oder hinten verschoben werden, bis beide Führungsmittel von der Gleitschiene frei sind. Da die beiden Führungsmittel meistens in einem großen Abstand voneinander angeordnet sind, um eine stabile Führung des Sitzes zu gewährleisten, muß entsprechend viel Platz im Fahrzeug vorhanden sein, um den Sitz so weit verschieben zu können, daß die Führungsmittel freikommen. Außerdem müssen beim Wiedereinsetzen des Sitzes die Führungsmittel in die Gleitschiene eingefädelt werden, was umständlich und in Anbetracht des Gewichtes des Sitzes und der beengten Platzverhältnisse schwierig ist. Durch die GB-A 637 219 ist eine Gleitschiene bekannt, die in dieser Hinsicht eine Verbesserung dadurch bringt, daß etwa in der Mitte des oberen Schenkels eine Aussparung vorgesehen ist, durch die eines der Führungsmittel von oben auf den unteren Schenkel aufgesetzt werden kann. Dadurch wird der Platzbedarf zum Einsetzen und Herausnehmen des Sitzes verringert, jedoch muß der Sitz immer noch um ein beträchtliches Stück nach hinten oder nach vorn von der Gleitschiene vorstehend aufgesetzt werden, um das eine Führungsmittel in die Aussparung einsetzen zu können. Außerdem muß das andere Führungsmittel nach wie vor in das eine Ende der Gleitschiene eingefädelt werden, was bei einem Verkanten des Sitzes auf Schwierigkeiten stößt.

Der Erfindung liegt die Aufgabe zugrunde, ein Gleitschiene zu schaffen, bei welcher der Platzbedarf für das Herausnehmen und Einsetzen des Sitzes erleichtert ist.

Diese Aufgabe wird durch die im Kennzeichen des Patentanspruches angegebenen Merkmale gelöst.

Bei der erfindungsgemäßen Gleitschiene können beim Einsetzen des Sitzes beide Führungsmittel gleichzeitig oder nacheinander auf den unteren Schenkel der Gleitschiene aufgesetzt werden, so daß sich das bei den bekannten Schienen erforderliche Einfädeln eines Führungsmittels in das Ende der Gleitschiene erübrigt. Zum Herausnehmen des Sitzes braucht der Sitz nur geringfügig über seinen normalen Verstellbereich hinaus in Richtung auf das mit der Aussparung versehene Ende der Schiene verschoben zu werden, bis die Führungsmittel mit den Aussparungen fluchten. In der gleichen Stellung wird der Sitz eingesetzt. Der Platzbedarf ist somit äußerst gering.

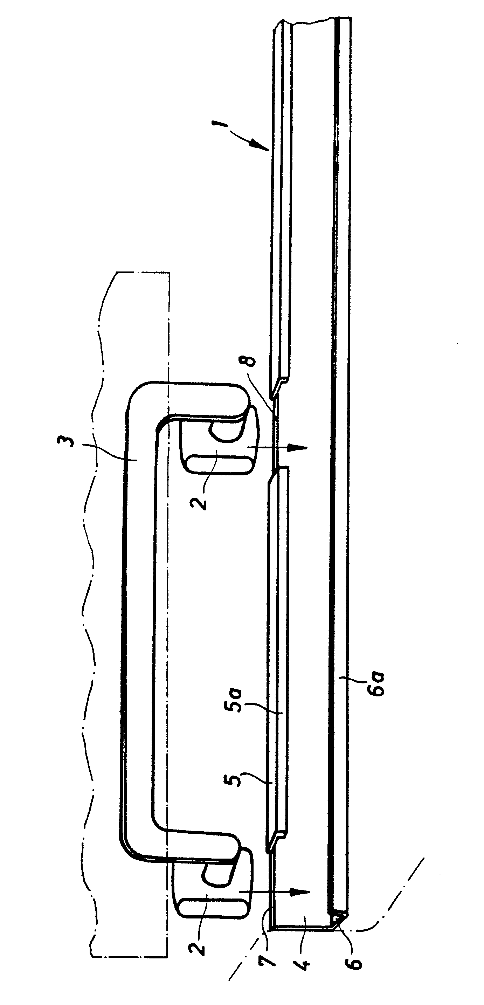

Ein Ausführungsbeispiel der Erfindung wird im folgenden unter Bezugnahme auf die Zeichnung näher beschrieben, in der eine Gleitschiene für den Sitz eines Kraftfahrzeuges in perspektivischer Ansicht vereinfacht dargestellt ist.

In der Gleitschiene, von der nur derjenige Teil gezeigt ist, der für die Erfindung und deren Erläuterung von Bedeutung ist, ist ein strichpunktiert angedeuteter Sitz eines nicht näher dargestellten Kraftfahrzeuges relativ zum Karosserieboden des Kraftfahrzeuges in Längsrichtung verschiebbar gelagert. Die Gleitschiene ist auf nicht näher dargestellte Weise mit dem strichpunktiert angedeuteten Karosserieboden verbunden. In ihr sind zwei über einen Bügel 3 miteinander und mit dem Sitz verbundene, von Gleitkörpern 2 gebildete Führungsmittel geführt. Die Gleitschiene 1 hat einen C-förmigen Querschnitt und weist einen senkrecht verlaufenden Steg 4 und je einen sich von diesem im wesentlichen waagerecht erstreckenden oberen Schenkel 5 und unteren Schenkel 6 auf.

Die in der Zeichnung von der Gleitschiene 1 wegen einer besseren Übersichtlichkeit in getrenntem Zustand dargestellten Gleitkörper 2 liegen normalerweise auf dem unteren Schenkel 6 längsverschiebbar auf und werden dabei beispielsweise von sich an die Schenkel 5 und 6 anschließenden Ansätzen 5a bzw. 6a übergriffen. Zur Verminderung der Reibung beim Verschieben des Sitzes weisen die Gleitkörper 2 zumindest an ihrer mit dem Schenkel 6 zusammenwirkenden Unterseite eine ballige Form auf.

Um das Einsetzen und Montieren des Sitzes mit seinen Gleitkörpern 2 von dem einen auf der Zeichnung linken Ende der Gleitschiene 1 her zu vereinfachen und zu erleichtern, weist der obere Schenkel 5 an diesem einen Ende der Gleitschiene 1 eine Aussparung 7 in etwa der Länge eines Gleitkörpers 2 auf, durch die die Gleitkörper 2 von oben in Pfeilrichtung auf den unteren Schenkel 6 aufsetzbar sind und auf diese Weise ohne schwieriges Einfädeln in die Gleitschiene 1 eingeschoben werden können. Wenn die Platzverhältnisse im Kraftfahrzeug jedoch begrenzt sind, um die Gleitkörper 2 nacheinander von dem Ende der Gleitschiene 1 her aufsetzen und einführen zu können, ist im oberen Schenkel 5 in einem Abstand von der Aussparung 7, der dem Abstand der Gleitkörper 2 entspricht, eine weitere Aussparung 8 vorgesehen, sodaß die Gleitkörper 2 - wie dargestellt-gemeinsam von oben in Pfeilrichtung durch den oberen Schenkel 5 hindurch auf den unteren Schenkel 6 aufgesetzt werden können.

In der Darstellung ist eine Gleitschiene mit Führungsmitteln gezeigt, wie sie an einer Seite mit einem Sitz verbunden ist. Selbstverständlich weist der Sitz für ein Kraftfahrzeug an seinen beiden Seiten eine derartige Gleitschiene auf.

Die Erfindung ist nicht auf das dargestellte Ausführungsbeispiel beschränkt. So können zum Beispiel anstelle der gezeigten, in der Seitenansicht eckigen Gleitkörper auch Rollen Verwendung finden.

**Patentanspruch**

Gleitschiene für den Sitz eines Kraftfahrzeuges, die mit dem Karosserieboden verbindbar ist, einen C-förmigen Querschnitt mit einem senkrechten Steg (4) und sich von diesem im wesentlichen waagerecht erstreckenden oberen und unteren Schenkeln (5 bzw. 6) aufweist, und in der zwei in einem Abstand voneinander angeordnete, mit dem Sitz verbundene Führungsmittel (2) längsverschiebbar geführt sind, welche auf dem unteren Schenkel (6) aufliegen, wobei der obere Schenkel (5) eine Aussparung (8) aufweist, durch die eines der Führungsmittel (2) von oben auf den unteren Schenkel (6) aufsetzbar ist,

dadurch gekennzeichnet, daß der obere Schenkel (5) an einem Ende der Schiene (1) eine zweite Aussparung (7) aufweist, durch die das andere Führungsmittel (2) von oben auf den unteren Schenkel (6) der Schiene (1) aufsetzbar ist, und daß der Abstand der ersten Aussparung (8) von der zweiten Aussparung (7) mindestens dem Abstand zwischen den beiden Führungsmitteln (2) entspricht.

**Claim**

Seat rail for the seat of a motor vehicle, capable of being connected to the floor of the vehicle and having a C-shape cross section with a vertical side (4) and upper and lower flanges (5 and 6) which are essentially horizontal with respect to the vertical side (4), such that two guides (2), which are connected with the seat and spaced a certain distance apart, can be moved lengthwise in the seat rail and are located on the lower flange (6), while the upper flange (5) is provided with an opening (8) through which one of the guides (2) can be inserted from above onto the lower flange (6),

characterized in that the upper flange (5) also has a second opening (7) at one end of the seat rail (1), through which the other guide (2) can be inserted from above onto the lower flange (6) of the seat rail (1), and that the distance between the first opening (8) and the second opening (7) is at least equal to the distance between the two guides (2).

**Revendication**

Glissière pour le siège d'un véhicule automobile pouvant être assemblée au plancher de la carrosserie, présentant une section en forme de C avec un dos vertical (4) et deux ailettes supérieure et inférieure (5 et 6) partant de la partie verticale et orientées dans un plan sensiblement horizontal; avec des éléments de guidage (2) solidaires du siège, guidés de telle sorte qu'ils puissent coulisser dans le sens longitudinal et portent sur l'ailette inférieure (6); l'ailette supérieure (5) présentant une découpure (8) à travers laquelle l'un des éléments de guidage (2) peut être posé par le haut sur l'ailette inférieure (6); la glissière faisant l'objet de l'invention est

caractérisée par le fait que l'ailette supérieure (5) présente à une extrémité de la glissière (1) une deuxième découpure (7) à travers laquelle on peut introduire l'autre élément de guidage (2) par le haut pour le poser sur l'ailette inférieure (6) de la glissière, l'espace entre la première découpure (8) et la deuxième découpure (7) étant au moins égal à l'espacement des deux éléments de guidage (2).